# EUROPEAN PATENT SPECIFICATION

(11) **EP 3 191 350 B1**
(45) Date of publication and mention of the grant of the patent: **31.10.2018**
(21) Application number: 15775012.6
(22) Date of filing: 07.09.2015
(51) Int. Cl.: B60S 1/04

(54) **A WINDSHIELD WIPER MODULE**
SCHEIBENWISCHERMODUL
MODULE D'ESSUIE GLACE

(30) Priority: 08.09.2014 TR 201410495
(43) Date of publication of application: 19.07.2017
(73) Proprietor: Tofas Turk Otomobil Fabrikasi Anonim Sirketi, Bursa (TR)
(72) Inventor: DOGRUEL, Sertac, 16369 Bursa (TR); ALTINOK, Evren, 16369 Bursa (TR); DERELILER, Hakan, 16369 Bursa (TR)
(74) Representative: Dericioglu Kurt, Ekin
(86) International application number: PCT/TR2015/050092
(87) International publication number: WO 2016/039707

(56) References cited:
- DE-A1-102007 024 888
- DE-A1-102009 056 237
- FR-A1- 2 878 808
- US-A- 4 943 102

## Description

### Field of the Invention

The present invention relates to designing a windshield wiper system in a compact way.

### Background of the Invention

It is important that the wiping mechanism is in correct position relative to the window so that wiping is performed properly. Even if the mechanism connected on the body is connected with the reference holes, it also has the tolerances coming from the connection operations of the body and coming from own production of the single parts. The wiper mechanism should tolerate these tolerances. However, when the tolerances are not tolerated, wiping cannot be performed properly on the window.

Due to the increasing emission requirements, it is obligatory to make optimization in body weights of the vehicles. One way to do that is to use alternative light materials having similar strength to the sheet metal material, and to use plastic instead of sheet metal in parts which do not have much effect on body strength. By this means, the total weight of the vehicle can be increased a little.

When it is considered as operation order, pool sheet metal and window bottom support traverse are connected to the body with point welding- structural paste application in body operations. After body painting process, first the wiper mechanism and then window and window bottom plastic are mounted in mounting lines, respectively. Different material parts in the same place are mounted in different operations, separate operation time is required for each one of them.
The German patent document no. DE102007024888 (A1), an application in the state of the art, discloses a windscreen module (2) for a vehicle. The module is located on a disk support provided at the lower edge (16) of the vehicle windscreen. The disk support is manufactured from fiber-reinforced plastic. A supporting place (8) is connected on the front wall (3) of the motor vehicle.
The French patent document no. FR2878808 (A1), an application in the state of the art, discloses a windscreen pillar. There is a metal (tempered steel or aluminum alloy) supporting tube (20) on the windscreen pillar (1). The supporting tube (20) is connected to the plastic thrust member (15) with injection moulding process for a side window or windscreen. Each thrush member (15) has an anchoring foot inside the supporting tube (20). The lower end (3) of the supporting tube (20) is permanently connected with the plastic fixing member (4). The German patent document no. DE102009056237 (A1) discloses a mounting structure for a wiper shaft and a front structure for a vehicle. The front structure comprises; a water box which is located below a windscreen of the vehicle and comprises a lower part, which runs on a front wall side of the vehicle in vehicle transverse position, a windscreen cross-beam for the reception of the windscreen, which runs under the windscreen of the vehicle in vehicle transverse direction, a wiper system with at least one wiper shaft, and at least one holding structure for the wiper shaft.

US 4 943 102 A1 discloses an example of a windshield wiper module with a body supporting a windshield and a wiper assembly.

### The Objective of the Invention

The objective of the present invention is to provide a windshield wiper module which is comprised of window, wiper motor, carrying body and cover system.

### Detailed Description of the Invention

A windshield wiper module developed to fulfill the objective of the present invention is illustrated in the accompanying figure, in which:

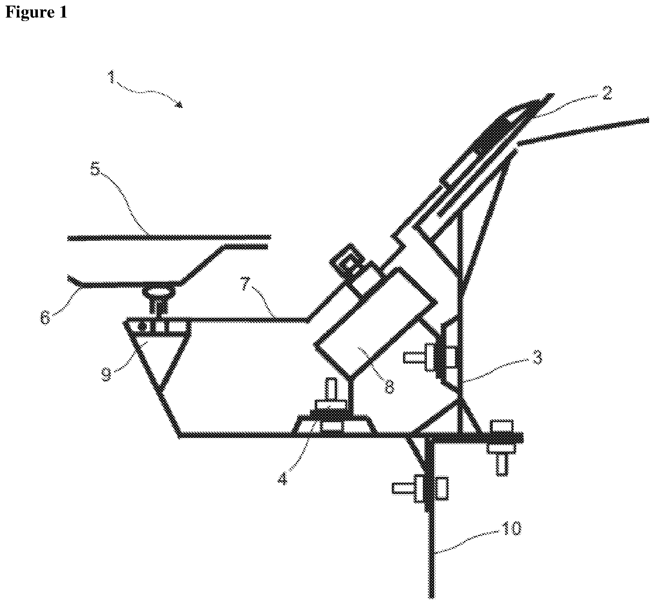

Figure 1 is the schematic view of the windshield wiper module.

The components shown in the figures are each given reference numbers as follows:
**1.** Windshield wiper module
**2.** Windshield
**3.** Plastic body
**4.** Connecting member
**5.** Motor hood
**6.** Motor hood bottom
**7.** Plastic traverse
**8.** Wiper motor
**9.** Plastic traverse hinge
**10.** Dashboard panel

A windshield wiper module (1), which is related to designing windshield wiper system in a compact way, essentially comprises
- at least one windshield (2) which is located on front part of the vehicle,
- at least one plastic body (3) in which the windshield (2) fits,
- at least one connecting member (4) which enables the plastic body (3) to remain fixed on place where it is positioned,
- at least one motor hood (5) which enables the preservation of the motor part,
- at least one motor hood bottom (6) which provides support for the motor hood (5),
- at least one plastic traverse (7) which is located on the lower part of the windshield (2),
- at least one wiper motor (8) which is mounted between the plastic body (3) and the plastic traverse (7),
- at least one plastic traverse hinge (9) which is located where the plastic body (3) and the plastic traverse (7) coincide,
- at least one dashboard panel (10) which is located on the lower part of the plastic body (3), the windshield wiper module being characterised in that:
   - the wiper motor is connected to the plastic body with bolts after the windshield and the plastic body are mounted,
   - the plastic traverse is mounted in the vertical axis of the vehicle after the wiper motor is connected with bolts and which traverse has vents thereon so that the wiper arm-wiper motor connection points go out.
In one embodiment of the invention, the windshield wiper module (1) which is used is generally comprised of windshield (2), wiper motor (8), plastic body (3) and plastic traverse (7). Before the windshield wiper module (1) is mounted to the vehicle, it can be pre-mounted in the automobile factory.
The windshield (2) is fitted into the slot which is U shaped on the plastic body (3) and which has injection tabs therein that will prevent the outwards movement of the windshield (2) in the slot. This groove continues along the windshield (2). The plastic body (3) has U shape relative to the vertical axis of the vehicle. There are water drainage holes at the right and left ends of the plastic body (3) in order to remove the water flowing on the windshield (2) from the electronic systems on motor area on rainy days. Forms are added into the plastic body (3) so that the wiper motor (8) is connected therein. There are nuts in these forms which are left inside the plastic body (3) via plastic injection process, the wiper motor (8) is connected to these connection points with bolt.
The wiper motor (8) is connected to the plastic body (3) via the bolts after the mounting of the windshield (2) and the plastic body (3). After the wiper motor (8) is connected to with the bolt, the plastic traverse (7) is mounted in vertical axis of the vehicle; it covers the plastic body (3) with motor by fitting with clips structure into the plastic body (3) in the front part, and the plastic body (3) first with hole-clips connection right behind the part where it enters into the plastic body (3) from the back. There are vents on the plastic traverse (7) so that the wiper arm-wiper motor (8) connection points go out.

In the windshield module (1), the connection of the plastic body (3) with the dashboard panel (10) is realized with bolt connection. The windshield module (1) is connected to the dashboard panel (10) via the nuts welded to the dashboard panel (10). It is connected on the upper chassis arm at right and left ends via bolt-nut. The windshield (2) is connected on the plastic body (3) with paste pasted with pre-operation.

## Claims

1. A windshield wiper module (1), **comprising**
- at least one windshield (2) which is located on the front part of the vehicle,
- at least one plastic body (3) in which the windshield (2) fits,
- at least one connecting member (4) which enables the plastic body (3) to remain fixed on place where it is positioned,
- at least one motor hood (5) which enables the preservation of the motor part,
- at least one motor hood bottom (6) which provides support for the motor hood (5),
- at least one plastic traverse (7) which is located on the lower part of the windshield (2),
- at least one wiper motor (8) which is mounted between the plastic body (3) and the plastic traverse (7),
- at least one dashboard panel (10) which is located on the lower part of the plastic body (3) the windshield wiper module being **characterised in that**:
- at least one plastic traverse hinge (9) which is located where the plastic body (3) and the plastic traverse (7) coincide,
- the wiper motor (8) is connected to the plastic body (3) with bolts after the windshield (2) and the plastic body (3) are mounted,
- the plastic traverse (7) is mounted in the vertical axis of the vehicle after the wiper motor (8) is connected with bolt, and which traverse (7) has vents thereon so that the wiper arm-wiper motor (8) connection points go out.

2. A windshield wiper module (1) according to claim 1, **characterized by** windshield (2) which is inserted into the slot having U shape on the plastic body (3) and having injection tabs that will prevent its upwards movement.

3. A windshield wiper module (1) according to any one of the preceding claims, **characterized by** plastic body (3) which has U shape relative to the vertical axis of the vehicle.

4. A windshield wiper module (1) according to any one of the preceding claims, **characterized by** plastic body (3) which has water drainage holes at its right and left ends in order to remove water flowing through the windshield (2) on rainy days from the electronic system in the engine area.

5. A windshield wiper module (1) according to any one of the preceding claims, **characterized by** plastic body (3) into which forms are added so that the wiper motor (8) is connected therein.

## Patentansprüche

1. Ein Scheibenwischermodul (1), **umfassend**
- mindestens eine Windschutzscheibe (2), die im vorderen Bereich des Fahrzeugs angeordnet ist,
- mindestens einen Kunststoffkörper (3), in den die Windschutzscheibe (2) passt,
- mindestens ein Verbindungsglied (4), das ermöglicht, dass der Kunststoffkörper (3) am Platz fixiert bleiben, wo er positioniert ist,
- mindestens eine Motorhaube (5), die die Erhaltung des Motorteils ermöglicht,
- mindestens einen Motorhauben-Unterteil (6), der für die Motorhaube (5) Unterstützung bietet,
- mindestens eine Kunststofftraverse (7), die am unteren Teil der Windschutzscheibe (2) angeordnet ist,
- mindestens einen Wischermotor (8), der zwischen dem Kunststoffkörper (3) und der Kunststofftraverse (7) montiert ist,
- mindestens eine Befehls-Navigator-Leiste (10), die am unteren Teil des Kunststoffkörpers (3) angeordnet ist, das Scheibenwischermodul **dadurch gekennzeichnet ist, dass**:
- mindestens einem Kunststofftraversenscharnier (9), das angeordnet ist, wo der Kunststoffkörper (3) und die Kunststofftraverse (7) zusammenfallen,
- der Wischermotor (8) mit dem Kunststoffkörper (3) mit den Bolzen verbunden ist, nachdem die Windschutzscheibe (2) und der Kunststoffkörper (3) montiert wurden,
- die Kunststofftraverse (7) in der vertikalen Achse des Fahrzeugs montiert ist, nachdem der Wischermotor (8) mit den Bolzen verbunden wurde, und wobei die Traverse (7) die Öffnungen darauf aufweist, so dass die Verbindungspunkte des Wisherarm-Wishermotors (8) rausgehen.

2. Ein Scheibenwischermodul (1) nach Anspruch 1, **gekennzeichnet durch** Windschutzscheibe (2), die im am Kunststoffkörper (3) U-Form habenden und Injektionslaschen aufweisenden Steckplatz steckt, wobei die Injektionslaschen hier ihre Aufwärtsbewegung verhindern.

3. Ein Scheibenwischermodul (1) nach einem der vorhergehenden Ansprüche, **gekennzeichnet durch** Kunststoffkörper (3), der bezüglich der vertikalen Achse des Fahrzeugs u-förmig ist.

4. Ein Scheibenwischermodul (1) nach einem der vorhergehenden Ansprüche, **gekennzeichnet durch** Kunststoffkörper (3), der an seinen rechten und linken Enden die Wasserablaufbohrungen hast, damit an Regentagen das durch den Windschutzscheibe (2) fließende Wasser von der Elektronik im Bereich des Motors entfernt wird.

5. Ein Scheibenwischermodul (1) nach einem der vorhergehenden Ansprüche, **gekennzeichnet durch** Kunststoffkörper (3), in dem die Formen hinzugefügt sind, so dass der Wischermotor (8) darin verbunden ist.

## Revendications

1. Module d'essuie-glace (1) **comprenant**
- au moins un pare-brise (2) qui est situé sur la partie avant du véhicule,
- au moins un corps en matière plastique (3) dans lequel le pare-brise (2) s'adapte,
- au moins un organe de liaison (4) qui permet de maintenir le corps en matière plastique (3) sur le lieu où il est positionné,
- au moins un capot moteur (5) qui permet de conserver la partie moteur,
- au moins un fond (6) de capot moteur qui supporte le capot moteur (5),
- au moins une traverse en matière plastique (7) qui est située sur la partie inférieure du pare-brise (2),
- au moins un moteur d'essuie-glace (8) qui est monté entre le corps en matière plastique (3) et la traverse en matière plastique (7),
- au moins un tableau de bord (10) situé sur la partie inférieure du corps en matière plastique (3), le module d'essuie-glace étant **caractérisé en ce que**:
- au moins une charnière de travers en matière plastique (9) située à l'endroit où le corps en matière plastique (3) et la traverse en matière plastique (7) coïncident,
- le moteur d'essuie-glace (8) est relié au corps en plastique (3) par des boulons après le montage du pare-brise (2) et du corps en plastique (3),
- la traverse en matière plastique (7) est montée dans l'axe vertical du véhicule après que le moteur d'essuie-glace (8) est raccordé avec le boulon et cette traverse (7) présente des évents de sorte que les points de connexion du moteur d'essuie-glace (8) en dehors.

2. Module d'essuie-glace (1) selon la revendication 1, **caractérisé par** un pare-brise (2) inséré dans la fente en forme de U sur le corps en matière plastique (3) et comportant des languettes d'injection empêchant son mouvement vers le haut

3. Module d'essuie-glace (1) selon l'une quelconque des revendications précédentes, **caractérisé par** un corps en matière plastique (3) en forme de U par rapport à l'axe vertical du véhicule.

4. Module d'essuie-glace (1) selon l'une quelconque des revendications précédentes, **caractérisé par** un corps en plastique (3) comportant des trous d'évacuation d'eau à ses extrémités droite et gauche afin d'éliminer l'eau qui traverse le pare-brise (2) le système électronique dans la zone du moteur.

5. Module d'essuie-glace (1) selon l'une quelconque des revendications précédentes, **caractérisé par** un corps en matière plastique (3) dans lequel des formes sont ajoutées afin que le moteur d'essuie-glace (8) y soit raccordé.
